Europäisches Patentamt

European Patent Office

Office européen des brevets

(19)

(11) **EP 1 179 138 B1**

(12) **EUROPEAN PATENT SPECIFICATION**

(45) Date of publication and mention
of the grant of the patent:
**11.02.2004 Bulletin 2004/07**

(21) Application number: **00924991.3**

(22) Date of filing: **15.05.2000**

(51) Int Cl.$^7$: **F03G 3/00**

(86) International application number:
**PCT/BG2000/000014**

(87) International publication number:
**WO 2000/073653 (07.12.2000 Gazette 2000/49)**

(54) **METHOD AND SYSTEM FOR GENERATING A LINEAR FORCE FROM ROTATION**

VERFAHREN UND EINRICHTUNG ZUR ERZEUGUNG EINER LINEAREN KRAFT VON EINER
UMDREHUNG

PROCEDE ET SYSTEME POUR GENERER UNE FORCE LINEAIRE A PARTIR D'UNE ROTATION

(84) Designated Contracting States:
**AT BE CH CY DE DK ES FI FR GB GR IE IT LI LU
MC NL PT SE**
Designated Extension States:
**AL LT LV MK RO SI**

(30) Priority: **18.05.1999 BG 10341099
24.09.1999 BG 10375299**

(43) Date of publication of application:
**13.02.2002 Bulletin 2002/07**

(73) Proprietor: **Vassilev, Velio Eniov
1331 Sofia (BG)**

(72) Inventor: **Vassilev, Velio Eniov
1331 Sofia (BG)**

(74) Representative:
**Patentanwälte Hosenthien-Held und Dr. Held
Klopstockstrasse 63
70193 Stuttgart (DE)**

(56) References cited:
**WO-A-89/10484        DE-A- 4 423 509
US-A- 4 744 259        US-A- 5 388 470**

**Description**

Technical field

The present invention relates to a method and systems for generating a linear force from rotation and will find implementation in autonomous linear acceleration of any devices, transport vehicles, lifters and other mechanisms of the type called hereto an independent translation system.

Background of the invention

The presently known methods and systems for generating linear force from rotation can be classified depending on the used principle and the working body material as follows: electromagnetic, quantum, electronic, gravitational, impulsive, fluidic, gyroscopic /precession/, phase-frequency and eccentric-rotational. Actually the closest to the present invention are the designs from the last two groups - phase-frequency and eccentric-rotational. The phase-frequency methods and systems use rotation of at least two subsystems by different frequencies and a phase difference of the reaction forces is obtained. On the same principle are based the designs known from the published international application WO 89/10484 (PCT/FR89/00200) "PROPULSION METHOD AND ASSEMBLIES USING THE OSCILLATION OF FLEXIBLE BLADES ROTATINGLY DRIVEN IN A FORCE FIELD". That known designs use rotation of elements (r) at rotating speed $\Omega$ about a central axes while the elements rotate about other axes at speed $\omega$. Due to the phase difference arising as a result of the law of action of masses along the blades which compose the flexible elements a propulsion force perpendicular to the centrifugal force of the rotation is generated.

The disadvantages of that known solution consist in its complicated construction, little generated force as the forces are applied crosswise of the working bodies, low efficiency. To obtain the shown phase difference it needs revolution speed unattainable for the current technologies.

On the same principle is based also the design known from RU No.2087746 "Method for generating active propulsion forces in changeable mechanical systems". The essence of that known design is as follows: in changeable mechanical systems at the mass center of each solid crosswise rotating outer circular forces are applied. These forces change cyclic their size together with the rotating speed of the system's solids following the law of harmonious asymmetrical oscillation about the axes of the resultant force. Arising in the system resisting torque from the system's solids rotation is determined by providing of a constant angle speed of rotation of the system's solids mass centers.

The disadvantages of that design are complicated construction because of the sine forces generators availability, changeable angle speed which provoke grate dynamic loads, little phase difference because of the fact that the acting forces are applied crosswise to the working body which on its part determines obtaining little propulsion force. The asymmetry of the acting forces brings to grate dynamic tensions that are related to increase of the construction mechanical strength requirements

In the eccentric-rotation methods and systems for getting traction is used the mass action of rotating and static solids at that the rotating center is asymmetric about the orbits which sometimes are complicated plane curves and in many cases spatial closed curved lines. The design known from RU No.2056524 "The gravitational engine of Savelkaev" is based on that principle. This engine has two solids with equal masses mounted on a common base allowing their simultaneous linear move from one to another position and also counter rotating motion. The linear and the rotating motions are done on the base plane by a driving device that is a crank-rocker mechanism

The disadvantages of that known design are namely that grate dynamic tensions appear in certain points when the solids rotate along the above said complicated curves. Due to that grate dynamic loads the necessary revolutions can not be reached in order to get bigger phase difference and consequently bigger traction and efficiency. The method for the construction design and the construction itself are very sophisticated.

On many design drawings are shown springs which however has secondary construction functions and are not used as basic working elements and respectively the genesis of the propulsion forces is not searched in the springs themselves or in the elasticity of the solids.

DE 44 23 509 describes a method and a system for generating a linear force from rotation where a working body is fixed to a driving mechanism to rotates at constant rotating speed. At least at one point of the working body periphery is applied a force impulse, by passing over at least one deforming surface, deforming elastically the working body and directed radially.

The main disadvantage of this known solution is that it can not provide for obtaining of a linear force sufficiantly grate for practical use.

Summary of the invention

The aim of the present invention is to create a method and a system which guarantee generating of a grate practically usable directed force whereas the design of the system is simplified and the respective dynamic load in it to be commensurable with the obtained traction.

The aim is reached by a method for generating a linear force from rotation where the working body rotates at constant rotating speed. The method is characterized in that at least at one point of the working body periphery a force impulse is applied deforming elastically the working body and directed radially. At that an energy power field is generated having length of the wave $L_E$ and speed $V_E$ that passes through the working body so at a point opposite to the point of the impulse application the working body transmits to the system a secondary impulse. The secondary impulse vector is turned up about the vector of the applied impulse at an angle different of 180° and the resultant force of the two impulses is the linear force.

It is expediently that the working body rotates by rotating speed $N_K$ corresponding to the time for the energy power field motion through the working body $T_k = \sqrt{2m/C}$, where **m** is the mass of the working body, **C** is the elastic index of the working body. At that the reactions of the forces as a result of the applied impulse become unidirectional.

It is appropriate the working body to rotate with speed **N** which is less than rotating speed $N_k$ corresponding to the time $T_k$ for the energy power field motion through the working body. $T_k = \sqrt{2m/C}$ where **m** is the mass of the working body, **C** is the elastic index of the working body. At that the vector of the secondary impulse is turned up to angle $\Theta = \pi . N/N_k$ and the dimension of the linear force is to be corrected by a coefficient $K_2 = 2\sin(\pi N/N_k . 2)$

In a preferred variant of the method at a point of the working body periphery on each its revolution in a determined zone and fixed period of time **T** several contiguous power impulses are applied. At that $Ti < T_K/2$, and $Ti = \Sigma t_i$ where $t_i$ is the time for applying of each particular impulse.

In an other version of the method on each revolution of the working body impulses of deforming forces are applied consecutively at points of the working body periphery passing through a determined zone

It is appropriate impulses of deforming forces to be applied at fixed points of the periphery of two or more working bodies on each revolution.

It is also appropriate the deforming forces to be applied incessantly on the working body periphery.

It is possible the deforming forces to be applied in direction of stress or strain of the working body.

The aim is reached also by a system for generating a linear force from rotation including a working body mounted on a drive mechanism so that the working body rotates. The system is characterized in that the working body is elastic or solid and at a zone of the trajectory of the working body periphery at least one point passes over at least one deforming surface. When that point of the surface of the working body passes over the deforming surface a force impulse is generated deforming the working body and directed radially.

In one variant of the system the ends of the working body are fitted in caps so that it can slide. Besides the working body together with the caps are fitted in a cylindrical body so that the caps slide freely in the cylindrical body which is fixed on the rotor of a drive mechanism. On the face surfaces of the caps are mounted rollers which roll over the inside surface of a cylindrical housing and to the housing at determined zone of the rollers trajectory at least one deforming surface is mounted.

In another variant of the system the working body is fixed on the drive mechanism rotor and at the ends of the working body are mounted rollers. At that the working body is placed beside a cylindrical housing so that the rollers roll over the outer surface of the housing on a determined zone on which a deforming surface is formed.

In other variant of the system the working body is placed in a cylindrical body which is fixed on the outlet shaft of a conic gear train the inlet shaft of which is the shaft of the drive mechanism. At the ends of the working body are mounted rollers so that they roll over the inner surface of a cylindrical housing in which the working body is placed and also the deforming surface is fixed on the housing.

In other variant of the system the working body is placed in a cylindrical opening formed in a flywheel that is fixed on the drive mechanism rotor. At the ends of the working body are mounted rollers so they roll on the inner surface of a cylindrical housing in which the flywheel and the working body are placed whereas the deforming surface is fixed on the cylindrical housing.

In other variant of embodiment the system includes two identical working bodies fixed on the shafts of the gear train so they rotate to different directions whereas one of the shafts is the outlet shaft of the drive mechanism. On the ends of each working body are mounted the respective rollers so that they roll over the cylindrical surfaces of the housing which forms two cylindrical chambers in one of which one working body is placed and in the other the second working body is placed. At that one shaft lays along the longitudinal axis of the first cylindrical chamber and the other lays along the longitudinal axes of the second cylindrical chamber of the housing. Besides two deforming surfaces are foreseen fixed on the respective cylindrical surfaces of both housing chambers.

For these variants it is appropriate the deforming surface to be assembled on the housing with a possibility for radial movement and movement along the circus of the cylindrical housing and fixing at a determined position and to be provided with a regulating device.

It is expediently the working body to be a solid or a cylindrical spring. It can be with a variable cross section that increases from the ends of the working body to its center of rotation.

In another variant of the system the working body is formed as a disc whereas the deforming surface is mounted on the housing. The drive mechanism rotor is fixed on the working body and the stator of the drive mechanism is fixed on a shaft that is a part of the housing.

In still other variant of the system the working body is a metallic disc fixed symmetrically with a gap on a shaft which is fixed on the drive mechanism rotor. The disc is fixed on the shaft by rubber washers and pressing nuts so that the outer periphery surface of the disc slides on the inner cylindrical surface of the housing on which is mounted the deforming surface.

In the above variant it is appropriate the shaft to be an inlet shaft of a gear train on outlet shaft of which is mounted a second metallic disc by rubber washers and pressing nuts. At that the second disc is placed in a cylindrical housing on which inner cylindrical surface is mounted a second deforming surface.

In other variant the system includes at least two disc-formed working bodies. At that one working body is fixed on a shaft which is mounted with a possibility for movement of the axes in a groove made in the housing and the other working body is mounted in the housing and fixed on the drive mechanism rotor. At that the first working body is fixed on a determined position about the second working body so in the contact zone of the two working bodies is created a deforming surface.

It is appropriate the working body to be a hollow cylinder in which inner volume is filled fluid.

Also it is possible the working body to be made from a composition of more than two materials.

The system can include two or more deforming surfaces.

When the working body is disc like it can be a gas-filled disc made of elastic material.

The aim is also reached by a system for generating a linear force from rotation including a working body fixed on a drive mechanism so that the working body rotates. The system is characterized in that the working body is elastic or solid and is formed from at least two hollow discs joint each other by a medial sector and placed crosswise about the rotation axes. The working body is placed and rotates in a housing by means of bearings, besides to the inner side of the housing a deforming device is mounted so it presses or strains the medial section of the working body.

In a variant of the system at the medial sector is mounted a bearing the inner rotating ring of which is fixed firmly to the medial sector and the outer ring is fixed on the deforming device.

In other variant of the system the working body is made from more than two hollow disks. At that variant it is appropriate the hollow discs forming the working body to be even number.

In other preferred variant of the system the deforming device is provided with a regulating device for change of the position and/or the length of the deforming device.

The aim is also reached by a system for generating a linear force from rotation including a working body fixed on a driving mechanism so that the working body rotates. The system is characterized in that the working body is formed from at least one hollow cylinder which axes coincide with the axes of rotation. Besides a deforming device is mounted freely on the inner side of the housing so that it press or strain the middle of the outer cylindrical surface of the working body.

Variant of the system includes a cylindrical elastic or solid body which medial units are made from more than one joint cylinders put in each other thus elongating the path of the wave and phase difference.

The advantages of the method and system for generating a linear force from rotation consist in the simplified design by which in the different variants of embodiment of the system are generated big linear forces and respectively high efficiency. The possibilities for obtaining variable phase difference of the deforming force and the reaction by changing the position of the deforming surface are exceptionally useful for obtaining a different linear force regarding its dimension and direction.

Description of the attached drawings

Figure 1 is a principle drawing of the system for generating a linear force from rotation according the invention.

Figure 2 illustrates the deformation of the working body /spring/ when it passes over the deforming surface.

Figure 3 illustrates the deformation of the working body /solid cylindrical rod/ when it passes over the deforming surface.

Figure 4 is a diagram showing the forming of an energy power field in a spring.

Figure 5 is a diagram showing the creation of an energy power field in a solid.

Figure 6 shows a variant of the working body rotation around point **O**.

Figure 7 shows other variant of the working body rotation around point **B**.

Figure 8 is a diagram of the velocities and forces formed of the mass action.

Figure 9 is a diagram of the forces formed as a result of the elastic deformations.

Figure 10 shows a variant of the working body having a variable cross section.

Figure 11 shows another variant of the working body with a variable cross section.

Figure 12 present a variant of the system shown on Fig.1, where the deforming forces applied on the working body are at strain direction.

Figure 13 is a variant of the system shown on Fig.1. with changed axes of rotation and a variable cross section of the working body.

Figure 14 is a variant of the system shown on Fig. 1, using a flywheel.

Figure 15 is a variant of the system shown on Fig.1, with two working bodies.

Figure 16 is a diagram of the forces at a rotating speed of the working body lower than the critical rotating speed and two working bodies of the system.

Figure 17 is a variant of the system shown on Fig 1, including a disc-formed working body and specific drive mechanism.

Figure 18 is a variant of the system shown on Fig.1 with two disc-formed working bodies.

Figure 19 is a variant of the system shown on Fig.1 including two disc-formed working bodies deforming each other.

Figure 20 is a principle drawing of a system for generating a linear force from rotation according to the invention including a working body formed as hollow discs.

Figure 21 is a principle drawing of a system for generating a linear force from rotation according to the invention including a working body formed as hollow cylinders.

Examples of embodiment of the invention

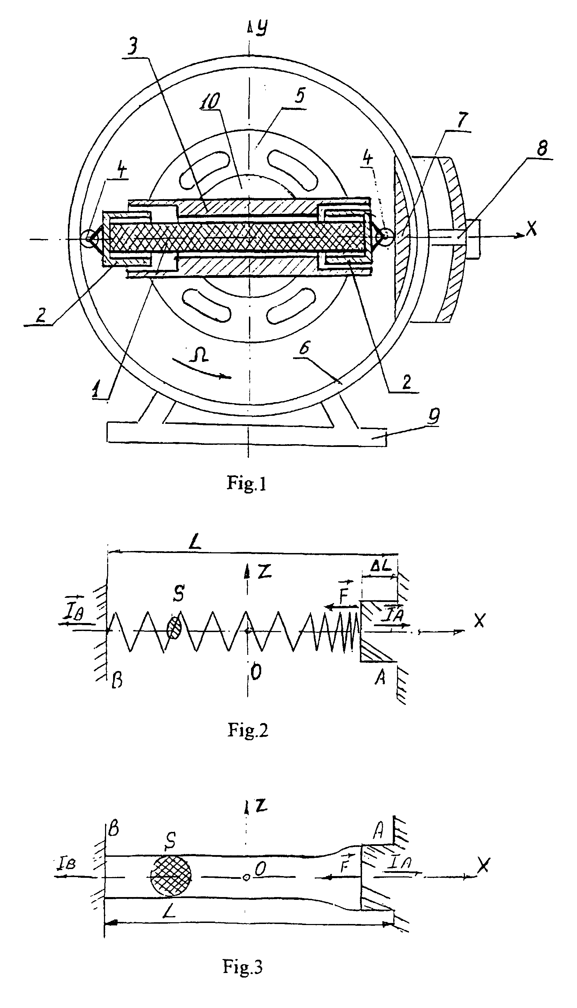

The system for generating a linear force from rotation (fig.1) includes a cylindrical elastic or solid working body 1 with cross section **S** and length **L**. the ends of which freely slide in the caps 2 which also slide freely in the cylinder 3. The cylinder 3 is fixed on the rotor 10 of the drive mechanism 5. which rotates by constant angle speed $\Omega$**=constant.** On the outer side of the caps 2 are mounted the rollers 4 which roll on the inner surface of the cylindrical housing 6 on which is mounted the deforming surface 7. The deforming surface 7 can move along the circle of the cylindrical housing 6 and radially and can fix at a determined position about the housing 6 by means of a regulating device 8. The working deforming surface 7 is designed so that during their motion the rollers 4 move radially up to $\Delta$**L**$_{max}$ at that the tension in the working body 1 is $\sigma<\sigma$**p** where $\sigma$p is the limit tension of proportionality where is valid the law of Huk.

In this execution of the system the stator of the drive mechanism 5 and the housing 6 are fixed on the bearing frame 9.

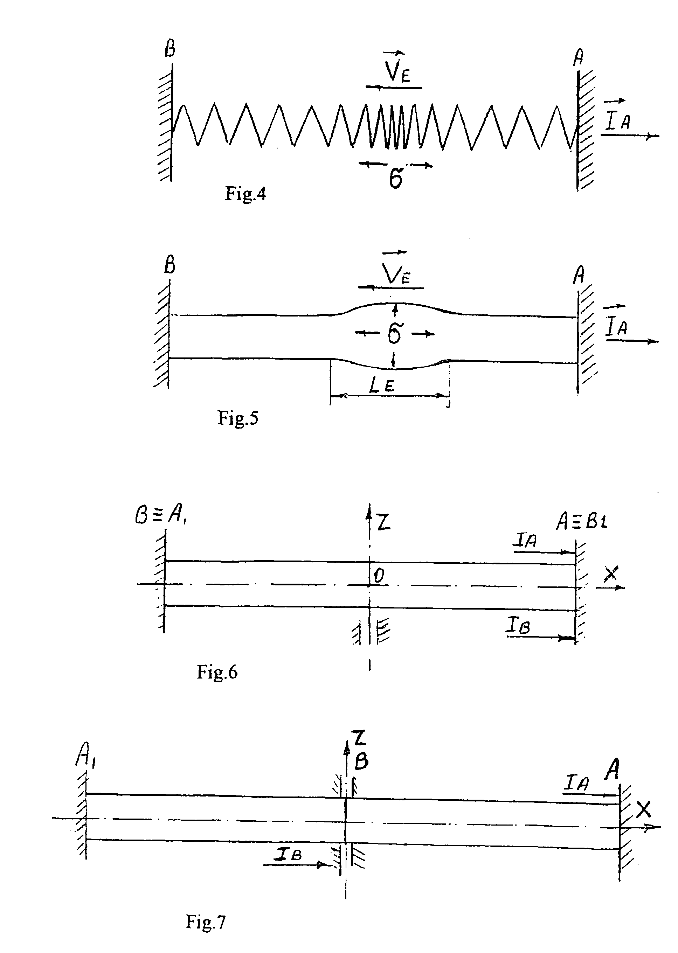

Here down is revealed the essence of the method according to the invention. To motion one end **A** of the elastic working body 1 formed as a cylindrical spring (fig.2) or a solid working body (fig.3) at a distance $\Delta$**L** to direction **-X** and getting back to direction **+X** or opposite a force impulse **I**$_F$ is necessary. At that $\Delta$**L** is such that the tension due to the forces action in the working body 1 is $\sigma<\sigma$**p**. As a result the system receives an impulse **I**$_A$**=-I**$_F$ and an energy power field is created with length of the wave **L**$_E$ and velocity **V**$_E$ (see fig.4, fig.5). This field moves from point **A** to point **B** for time **T**$_K$=$\sqrt{2m/C}$ and in point **B** transmits a force impulse **F**$_B$.

In the same time while the field is moving the working body 1 turns about the axes **Z** around point **O** /fig.6/ or around point **B** /fig.7/ in the plain determined by the coordinates **XY** to an angel $\Theta=\pi$ or $\Theta$**=180°** for the same time **T**$_K$ corresponding to a determined angle speed $\Omega_K$ and rotating speed **N**$_K$ The force impulse at point B - **I**$_B$ becomes identical to the impulse **I**$_A$ at point A or **I**$_A$**+I**$_B$ **= I**$_C$; **I**$_C$ $\neq$ **0**; **I**$_C$ $\approx$ **2I**$_E$ so the acceleration which the system will get is **a=Ic/2$\pi$Mc** where **Mc** is the total mass of the system.

The method for generating a linear force from rotation according the invention can be explained by the following theoretical calculations and conclusions:

All the solids and the simple springs are characterized by elasticity in certain limits of deformations. If the deformation $\Delta$**L** collinear to longitudinal axes of the working body 1 is such that the law of Huk is valid than the following equations can be written:

$$\Delta L/L = \varepsilon; \qquad \varepsilon = \sigma /E; \qquad \sigma = F/S; \qquad C = F/\Delta L$$

where:

$\Delta$**L[M]**      -absolute extension /contraction/ in linear meters

**L [M]**      -length of the working body 1 in linear meters

$\varepsilon$      -relative extension /contraction/

$\sigma$**[N/M$^2$]**      -working tension in newtons on square meter

**E[N/M$^2$]**      -module of elasticity in newtons on square meter

**F[N]**      -acting power in newtons

**C[N/M]**       -elastic index in newtons on meter

From the above equations we define the elastic index of the solids:

$$(1) \qquad C=E.S/L[N/M]$$

The elastic index **C** of a simple spring can be defined easily by loading the spring with different weights and its absolute extension /contraction/ is measured in the limits of the linear formula **F=f(ΔL)**. The same index can also be defined by the known from the technical literature method for its calculating.

When the end A of the working body moves to an infinitesimal distance **dl** << Δ**L** by speed **V** an infinitesimal mass **dm** is accelerated for that is necessary a force **dF**. On the other hand deforming the working body 1 by **dl** arises internal tension as consequence of the law of Huk and using for more simplicity the formula for the defined above elastic index and some basic concepts of the general mechanical theory we can write the equations:

$$(2) \qquad dF=dm.dV/dt;$$

$$(3) \qquad dF=Cdl;$$

$$(4) \qquad dm =\rho.S.dl;$$

$$(5) \qquad V=dl/dt,$$

where $\rho$**[kG/m$^3$]** -density of the working body in kilograms in cubic meters **S [m$^3$]** - cross section of the working body considered as a constant

From the equations (2),(3),(4) and (5) we make the equations:

$$(6) \quad dm.dV/dt=C.dl; \quad \Rightarrow \quad (7) \quad \rho.S.dl.dV/dt=C.dl; \quad \Rightarrow \quad (8) \quad \rho.S.dV=C.dt$$

After we integrate the left and the right parts of the equation (8) we get

$$(9) \qquad \rho.S.V.= C.t$$

Using the equation (5) we come to the equations:

$$(10) \qquad \rho.S.dl/dt = C.t; \qquad => \qquad (11) \qquad \rho.S.dl = C.t.dt$$

We integrate in the respective limits

$$(12) \quad \int_0^L \rho.S.dl = \int_0^{Tk} C.t.dt;$$

$$(13) \qquad \rho.S.L = C.Tk^2/2;$$

$$(14) \qquad m=C.Tk^2/2$$

where:

**m [kG]** - the mass of the working body in kilograms
**Tk [s]** - critical time in which the created power field front will move along the longitudinal axes of the working body 1 from point A to point B

$$(15) \qquad Tk = \sqrt{2m/C}$$

Using the equation (1) and (4) we write

$$(16) \qquad Tk = L\sqrt{2\rho/E}$$

The speed by which the front of the power field moves along the length of the working body is:

$$V_E = E/2m; \qquad V_E = L\sqrt{C/2m}.$$

The equation (15) and (16) are basic for the present invention. The following conclusions can be done from them.

1. The time **Tk** does not depend on the dimension of the forces **F** and the impulses I which are applied.
2. The time **Tk** does not depend on the speed of action.
3. The time **Tk** does not depend on the cross section of the working body
4. The time **Tk** does not depend on the parameters of the power field.
5. For each particular body the time **Tk** is a constant and can be calculated as a function of its calculating length- $T_K = f(L)$.

For obtaining the desired phase difference of the force impulses of the reactions $I_A$ and $I_B$ (fig2, 3) it is necessary the working body to be turned in time **Tk** to an angle $\Theta_K = 180°$; $\Theta_K = \pi$

From the general theory for circular motion we write the equations

$$(17) \qquad \Theta_K = \pi;$$

$$(18) \qquad \Theta_K = \Omega_K \cdot T_K;$$

$$(19) \qquad \Omega_K = \pi \cdot N_K/30;$$

where:

$\Theta_K$ - critical turning angle
$\Omega_K$ - critical angle speed - constant
**Nk [rpm]** - critical rotating speed - constant.

From the above equations it follows:

$$(21) \qquad Nk = 30\sqrt{C/2m};$$

$$(22) \qquad Nk = 30/LV\sqrt{E/2\rho}$$

In formula (21) and (22) is seen that the critical rotation speed Nk is a constant for a particular working body 1 and can be defined in advance as a function of its calculating length. The function **Nk=f(L)** concerning some materials is shown on table 1.

- Table 1

| Material of the working body | E N/m$^2$ | ρ kG/m$^3$ | N$_k$ [rpm] | | | |
|---|---|---|---|---|---|---|
| | | | L=10m | L=5m | L=1m | L=0.5m |
| Steel | $2.10^{11}$ | $7.8.10^3$ | $11.10^3$ | $22.10^3$ | $11.10^4$ | $22.10^4$ |
| Bronze | $0.9.10^{11}$ | $8.5.10^3$ | $9.10^3$ | $18.10^3$ | $9.10^4$ | $18.10^4$ |
| Gold | $1.2.10^{11}$ | $19.3.10^3$ | $5.10^3$ | $10.10^3$ | $5.10^4$ | $10.10^4$ |
| Rubber | $78.10^5$ | $1.3.10^3$ | 164 | 328 | 1640 | 3280 |
| Vulcanite | $258.10_5$ | $1.4.10^3$ | 287 | 575 | 2870 | 5750 |

To define the resultant acting force of the system $F_C$ for convenience and clarity we resolve it into two forces $F_C=F_M+F_E$ and the relative impulses $I_C=I_M+I_E$ where:

$F_M$ and $I_M$ are respectively the resultant force and impulse as a result of the mass motions
$F_E$ and $I_E$ are respectively the resultant elastic force and impulse as a result of the deformation.

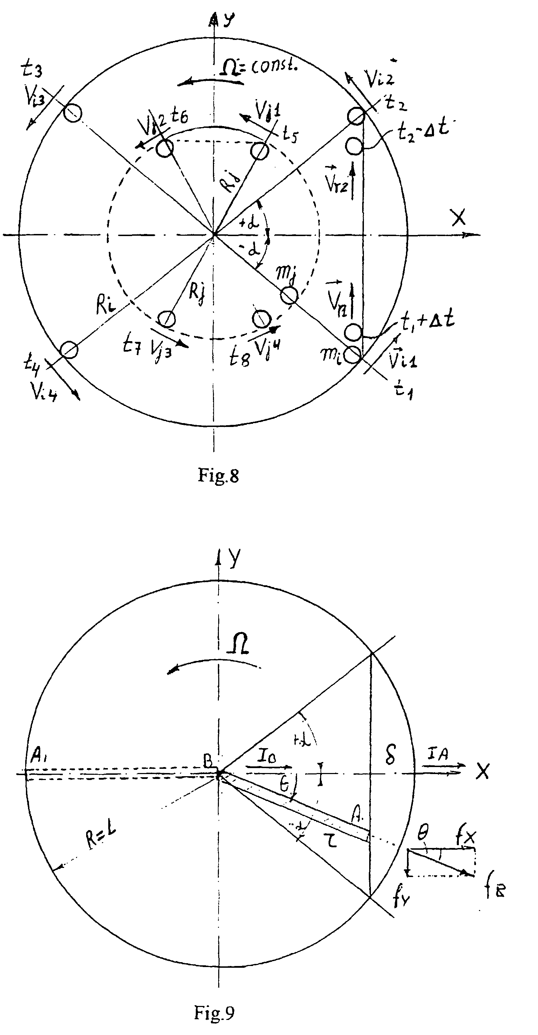

To define $I_M$ and $F_M$ we proceed from the diagram shown on fig.8. On that diagram for a concrete chosen profile of the deforming surface 7 we follow the motion of the mass $m_i$ which is a part taken at random from the mass of all the rotating elements of the system /the working body and the other constructive details/. For the motion of the mass $m_i$ are valid the following equations:

$$V=\Omega R; \qquad dV=\Omega dR; \qquad \Theta=\Omega t; \qquad d\Theta=\Omega dt; \qquad f_{mi}= m_i.dV/dt; \qquad Im_i =\int f_{mi}dt$$

$$\Rightarrow$$

$$I_{mi} = \int m_i dVi$$

From the last equation we can write $I_{mi}=m_i(V_{i1}-V_{i2}) = m_i.\Delta V_{1,2}$
The function of the velocity $V=f(\Theta)$ interrupts at the meanings of $\Theta= -\alpha$ and $\Theta = +\alpha$ for that we integrate in separate intervals in which the function can be differentiated.
As we have chosen a symmetrical profile of the deforming surface 7 and $\Omega$ = constant we can write that $V_{r1} = V_{r2}$ /where $V_{r1}$ and $V_{r2}$ are respectively the velocities at time $t_1+ \Delta t$ and $t_2- \Delta t$ at that from the equation

$$\Delta V_{12}=(V_{r1}-V_{i2}) + (V_{i2}-V_{r2})$$

it follows

$$\Delta V_{12}=V_{i2}-V_{i1}$$

Diagonally opposite the mass $m_l$ motions along the circus with radius $R_i$ whereas at the respective moments $t_3$ and $t_4$ the velocities are respectively $V_{i3}$ and $V_{i4}$ therefore $\Delta V_{3,4}=V_{i4}-V_{i3}$.
From the symmetry it follows that $\Delta V_{1,2} = -\Delta V_{3,4}$ and therefore the resultant impulse $I_{mi}$ from the mass forces action in the two symmetrical intervals $t_1 - t_2$ and $t_3 - t_4$ is :

$$(22) \qquad I_{mi} = 0 \Rightarrow F_m i = 0$$

The same conclusions are valid for the symmetrical intervals $t_5 - t_6$ and $t_7 - t_8$ and the respective $m_j$ and $R_j$ so that $I_{mj} = 0$.
In addition to the above proof it is seen on fig.4 and fig.5 that due to the motion of the wave by speed $V_E$ the movement of the mass center of the working body 1 is along a closed curve as the body restores its initial form at an exactly fixed position on each revolution.

consequently:

$$I_M = \phi mcdV = 0; \Rightarrow F_M = 0$$

From the diagram shown on fig.9 we determine $\mathbf{I_E}$ , $\mathbf{F_E}$ as follows:

$$\Delta r = \Delta L; \delta < \Delta L_{max}; \sigma < \sigma_p$$

$\mathbf{r}$ - a variable radius; $\mathbf{r = f(\theta)}$
$\theta$ - a random angle
- $\alpha$ - a fixed angle where the deformation force starts its action
+$\alpha$ -an angle where the deformation force terminates its action

From the equations:

$$F = C\Delta L; \qquad \Delta r = R-r; \qquad \Delta r = \Delta L; \qquad r = (R-\delta)/\cos\theta; \theta = \Omega t; \qquad dt = d\theta/\Omega; f_x = f_R\cos\theta$$

We define:

$$f_x = C.R.\cos\theta + C.\delta - C.R$$

and the respective impulse

$$\mathbf{I_x = \int f_x.dt} \quad \Rightarrow \quad \mathbf{I_x = \int_{-\alpha}^{+\alpha} f_x.d\theta/\Omega}; \qquad \mathbf{I_x = 2 \int_0^{\alpha} fx.d\theta/\Omega}$$

After integrating it becomes

$$I_x = 2C(R\sin\alpha + \delta.\alpha - R\alpha)/\Omega; \qquad I_x \neq 0$$

From the same diagram shown on fig. it is seen that

$$I_x = I_A; \qquad N = N_k; \qquad \Omega = \Omega_k; \qquad I_E = 2I_A$$

therefore from the equations;

$$\Omega = 2\pi f; T = 1/f; F_E = I_E/T; \delta = R(1-\cos\alpha)$$

we define

$$(27) \qquad F_E = 2C.R[\sin\alpha + (1 - \cos\alpha)\alpha - \alpha]/\pi$$

$$F_E \neq 0$$

$$(28) \qquad F_E = 2E.S.R[\sin\alpha + (1 - \cos\alpha)\alpha - \alpha]/\pi L.$$

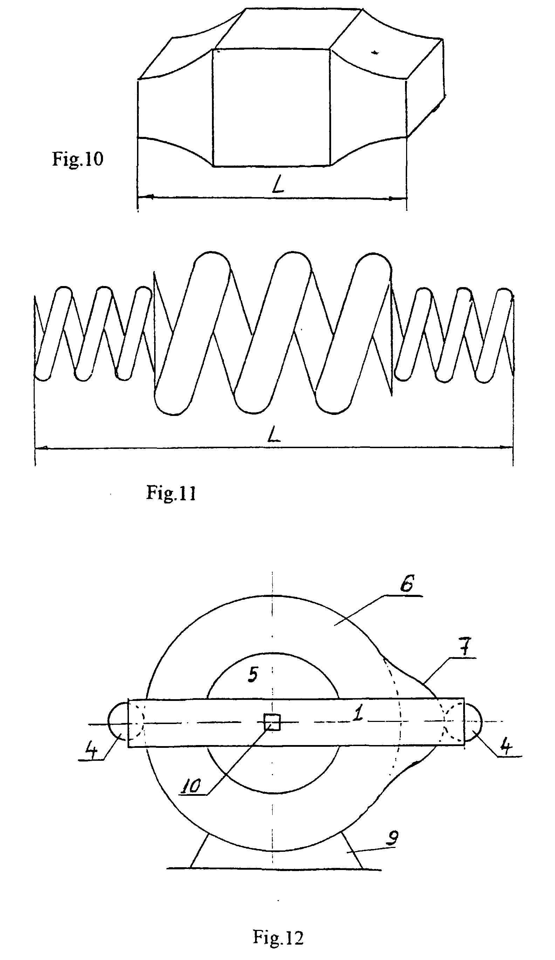

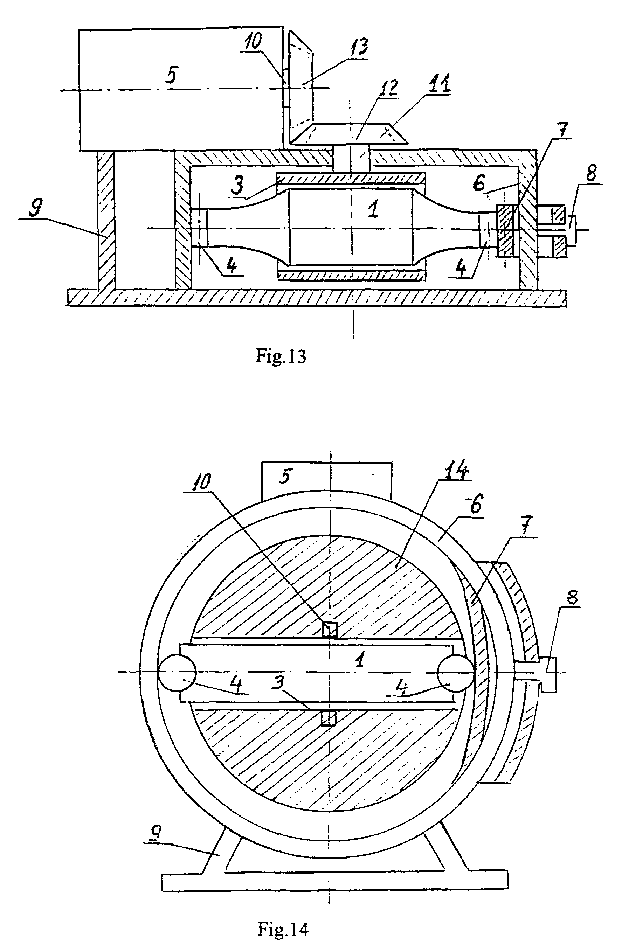

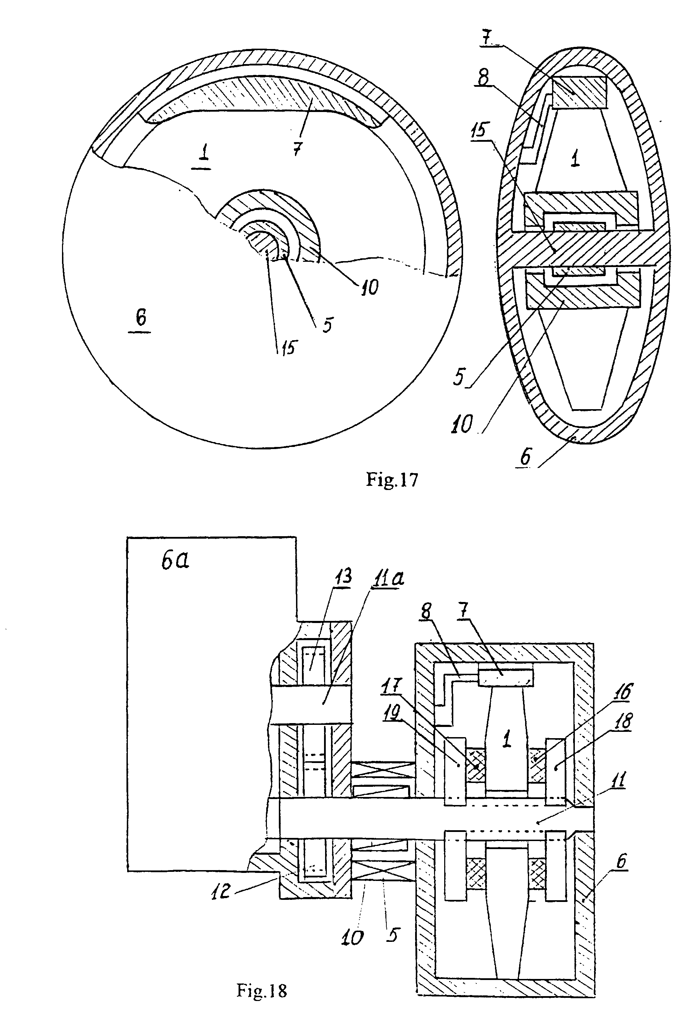

Formulas (27) and (28) are deducted for the specific profile of the deforming surface shown on fig.1. Naturally for other profile of the deforming surface 7 similar to that shown on fig.12 or fig.14 and also for other shape of the working body 1 for example as shown on fig. 10 or fig.17 the force $F_E$ will be defined in another way.

In formulas (27) and (28) the following is not taken into consideration:

- bending of the energy power field and the dispersion of the forces along and at the transitional zones in the beginning and at the end of the deforming surface 7 /see fig. 9/;
- preliminary tensioning and deformation of the working body 1 and the construction as a result of the centrifugal forces;
- action of the reflected waves of the power field end the dispersion of the tensions in the construction of the system.

After precise theoretical examinations not shown here and a range of practical measuring it was defined a coefficient $K_1$ which takes into consideration the above mentioned reasons. The meanings of that coefficient are in the range $0.68 \div 0.83$.

Having in mind that the critical rotating speed $N_K$ due to design reasons may not be reached or $N \neq N_K$, is appropriate to use another coefficient $K_2$, which is calculated by the formula:

$$K_2 = 2\sin(N.\pi/N_K.2) \text{ /here N is the working speed of rotation/.}$$

Taking into consideration all the factors the dimension of the linear force /traction/ which is generated following the method and the system according to the present invention and which will push the system to a determined direction will be:

$$Fc = K_1.K_2.F_E$$

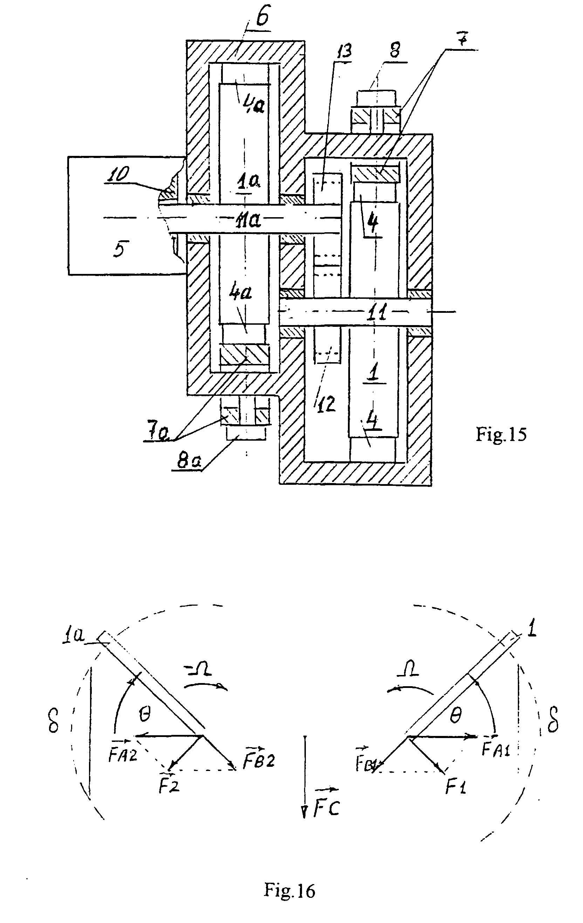

The vector direction of this force is determined according the diagram shown on fig.16, where $\theta$ is the actually obtained angle of phase difference $\theta = N.\pi/N_K$

On fig. 10 and 11 are shown two variants of execution of the working body 1 having a fillet central zone. Formed so the working body 1 can bear significantly grater strains without complicating the whole construction of the system. The specific shape of the solid working body on fig. 10 or of the spring on fig. 11 allows an even distribution of the tensions along the whole length and less deformation due to the action of the centrifugal forces.

At the execution variant of the system shown on fig.12 the working body 1 is fixed on the drive mechanism rotor which rotates by constant angle speed $\Omega$. At the ends of the working body 1 are mounted rollers 4 which roll on the inner surface of the cylindrical housing 6 so at each revolution of the working body 1 they pass over the contour of the deforming surface 7. The stator of the drive mechanism 5 and the cylindrical housing 6 are fixed on a bearing frame 9. The shown variant guarantee working body 1 under action of strain forces.

The system shown on fig.13 includes a working body 1 with variable cross section which freely slides in the cylinder 3 which is fixed on the shaft 11 and the conic gear train 12, 13 and the rotor 10 of the drive mechanism 5 rotates by constant angle speed $\Omega$. At the ends of the working body 1 are mounted the rollers 4 that roll on the inner surface of the cylindrical housing which together with the stator of the drive mechanism 5 is fixed on the baring frame 9. On each revolution of the working body 1 the rollers 4 pass over the deforming surface 7 which by means of the regulating device 8 can move to radius direction and along the periphery of the cylindrical housing 6 and also to be fixed at a determined position. At that embodiment of the system the variable cross-section of the working body allows higher rotating speed, higher phase difference of the reactions and therefore higher efficiency of the system. The plane of rotation can be changed using the gear train 12, 13 and an optimal rotating speed N can be chosen. The regulating device 8 allows variation of the dimension and the direction of the acting force on the plane of rotation of the working body 1.

In the variant shown on fig.14 the working body1 freely slides in the cylindrical opening 3 which is made directly in a flywheel 14. The flywheel 14 is fixed on the rotor 10 of the drive mechanism 5and rotates by constant angle speed $\Omega$. At the ends of the working body 1 are mounted the rollers 4 which roll on the inner surface of the cylindrical housing 6 and on each revolution of the working body 1 pass over the deforming surface 7. The stator of the drive mechanism 5 and the cylindrical housing 6 are fixed on the bearing frame 9. In that variant also is possible to be included a regulating device 8 which can guarantee a possibility for motion of the deforming surface to radius direction and along the periphery of the cylindrical housing 6 and also to allow fixing of that surface 7 at a determined position. By that variant is obtained simplification and lightening of the whole construction of the system whereas when the driving of the flywheel is done by a stationary drive mechanism can be obtained engineless motion for certain time.

In the embodiment of the system shown on fig.15 are foreseen two identical working bodies 1, 1a which are fixed on the shafts 11, 11a and rotate to different directions by constant angle speeds $+\Omega$ and $-\Omega$ by means of the gear train 12. 13 and the rotor 10 of the drive mechanism 5. At the ends of the working bodies 1 and 1 a are mounted respectively the rollers 4 and 4a which roll on the cylindrical surfaces, formed in the housing 6. On each revolution of the working bodies 1 and 1 a the rollers 4,4a pass over the deforming surfaces 7, respectively 7a. By means of the regulating devices 8 and 8a the surfaces 7, 7a can move radially and along the periphery of the cylindrical surfaces of the housing 6 and can fix at a determined position. At that variant is obtained a constant direction of the resultant force vector not depending on the rotating speed (see fig.16). By suitable positioning of the deforming surfaces 7 and 7a is got rotation of the system to a desired direction. Thus motion and acceleration of the system along all the axes of a three-dimensional co-ordinate is obtained.

In the embodiment shown on fig.17 the working body 1 is disc shaped and is fixed on the rotor 10 of the drive mechanism 5 and rotates by constant angle speed $\Omega$. The periphery of the working body 1 is deformed ceaselessly by the deforming surface 7 when the body rotates. The surface 7 can be moved radially and along the circle of the housing 6 and can be fixed at a determined position by means of the regulating device 8.

The stator of the drive mechanism 5 is fixed on the axes shaped as a part of the housing 6. This embodiment has a simplified and lightened construction that allows higher rotating speed and therefore bigger phase difference of the reactions and respectively higher efficiency.

The embodiment shown on fig.18 foresees the working body 1 to be shaped as metal disc which is fixed symmetrically with enough gap around the shaft 11 and is fastened by the rubber washers 16, 17 and the pressing nuts 18, 19. The disc 1 is rotated with constant angle speed $\Omega$ by the rotor 10 of the drive mechanism 5. The periphery slides on the inner cylindrical surface made in the housing 6, and is being deformed continuously passing over the deforming surface 7. By means of the regulating device 8 that surface 7 can move radially and along the circus of the cylindrical surface made in the housing 6 and to fix at a determined position. The other end of the rotor 10 of the drive mechanism 5 by means of the gears 2 and 13 and the shaft 11 a rotates another working body 1 a placed in the housing 6a, which contains the same units and details as the housing 6. By this variant of the system is obtained easily a constant direction of the resultant force vector not depending on the rotating speed. Besides a grate propulsion force is obtained and by appropriate positioning of the deforming surface 7 is obtained rotation of the system to the desired direction so that is realized a possibility for motion and acceleration of the system along all the axes of three-dimensional co-ordinates.

The torque is compensated which determine a stable orientation of the system during its motion.

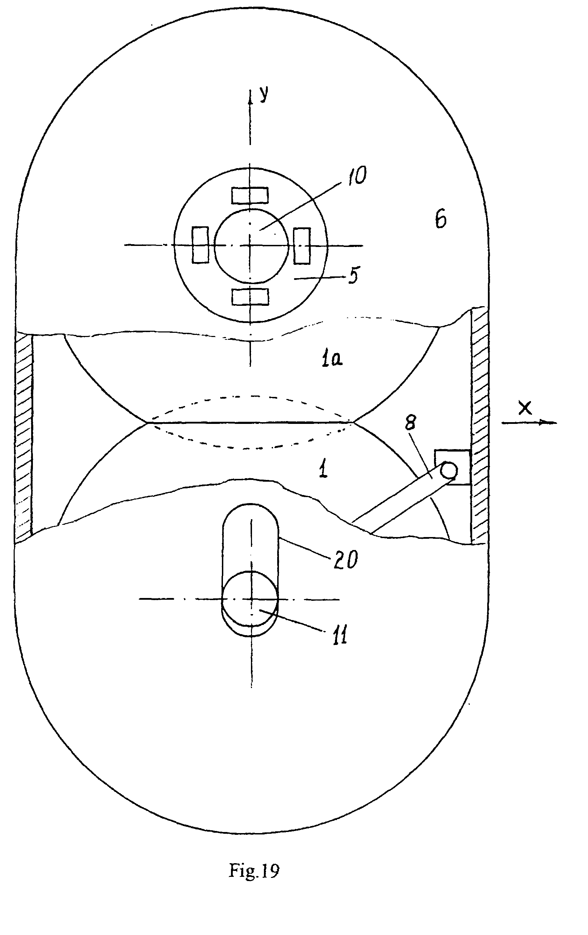

In the variant shown on fig.19, the disc shaped working body 1 is fixed on the shaft 11. This shaft can be moved along the axes Y in the groove 20 by means of the regulating device 8. The shaft stops at a fixed position whereas the axes of rotation keeps its orientation. Symmetrically about the axes X another working body 1 a is mounted which is fixed on the rotor 10 of the drive mechanism 5. The shaft 11 and the working body 1 are fixed at such position so that at the contact zone of the two working bodies 1 and 1 a an elastic deformation and a friction force are created such that the two bodies rotate by approximately equal but opposite angle speeds. That variant of the system has an extremely simple construction and constant direction of the propulsion force. The torque is compensated and the system is balanced as concerns the eccentricity. The resisting torque is little and can be reached high rotating speed and therefore high efficiency.

As it was described in connection with the different execution variants of the system illustrated on the attached figures the working body 1 one cane be made of a metal or non metal spring a solid of rubber, vulcanite, textolite, and other natural or synthetic materials or steel, bronze brass and other metals and alloys. The working body 1 can be made of composed materials from two or more solids.

The working body 1 may have varied shape, for example, cylindrical shape with constant cross -section a shape with variable cross-section or disc shaped.

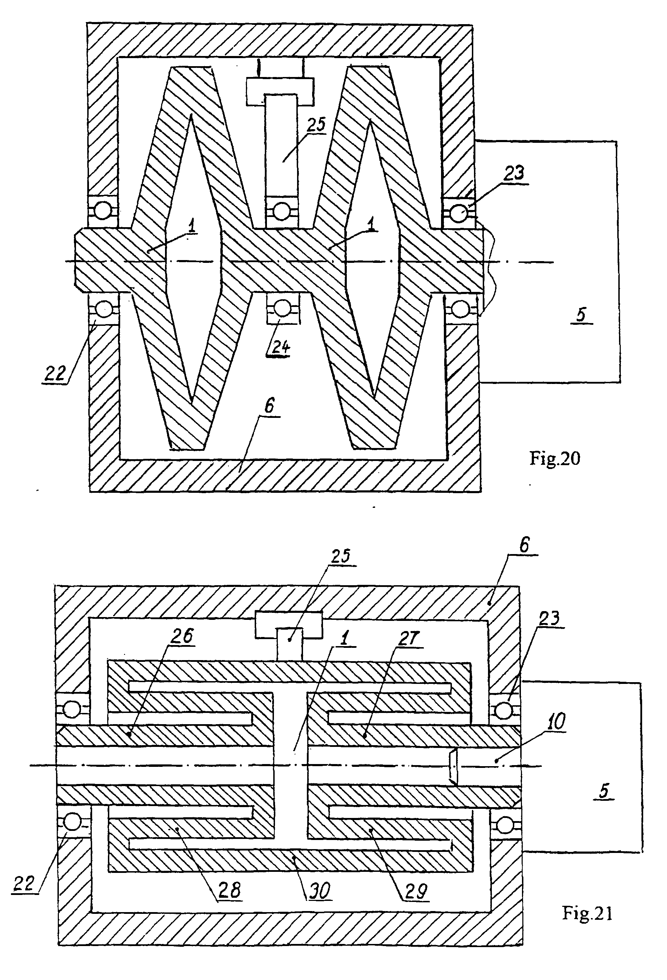

Another embodiment of the system for generating a linear force (fig.20) includes elastic or solid working body 1 formed as at least two hollow discs placed parallel each other and crosswise to the axes of rotation. The two discs are joint so that they have a medial sector on which is mounted the bearing 4 so the inner ring of the bearing 4 is fixed on medial sector. The outer ring of the bearing 4 is fixed on the deforming device 25 that is mounted freely to the housing 3 of the system. The working body 1 is placed in the housing 6 so the outer central part of one of the discs of the working body is formed as a shaft rotating about the housing by means of the supporting bearing 2. The outer central part of the other disc is formed as an inlet shaft fixed on the rotor of the drive mechanism 5

The performance of this system for generating a linear force from rotation is as follows:

When the working body 1 is rotated by the drive mechanism 5 at the medial sector between the two discs of the working body 1 is applied a deforming force at strain or stress by the deforming device 25. That force is applied consequently and continuously over different cross-sections of the medial sector due to the rotation of the working body 1. The primary force of reaction equal and opposite to the applied deforming force is transmitted through the deforming device 25 to the housing of the system. Under the action of the deforming force the walls of the discs which must be enough stout periodically are exerted by different tensions /at strain. stress. yield torsion and others/ corresponding to the rotating speed of the working body and the deforming impulses. As a result to the bearings 2 and from there to the housing 3 are transmitted secondary reaction forces. As the exertion of the disc's walls is done in a fixed period of time so the secondary reaction forces are not collinear to the primary reaction force. Consequently a resultant force that is different from zero is generated therefore the rotation is transformed into a linear force. Changing the disposition and the length of the deforming device 25 can be changed the direction and dimension of the generated linear force.

In a further embodiment the system for generating a linear force from rotation (fig.21) includes a cylindrical elastic or solid body 1 made from five joint hollow cylinders. These cylinders have enough stout walls and are put in each other so they form two central units 26, 27, two medial units 28, 29 and one outer unit 30. The outer end of the central cylindrical unit 26 is fixed on the inner ring of bearing 22 whereas the outer ring of the bearing is fixed on the housing 6. The outer end of the central cylindrical unit 27 is fixed respectively to bearing 23 and the rotor 10 of the driving mechanism 5. A zone in the middle of the outer cylindrical unit 30 surface of the working body contacts the deforming device 25 which is mounted freely on the housing 6.

The action of this embodiment of the system is as follows: (see fig 21). After driving of the working body 1 by the driving mechanism 5, force impulses are applied by the deforming device 25 at the middle zone of the outer cylindrical surface. The force impulses are applied consequently and continuously. The primary reaction force corresponding to the applied impulses is transmitted through the deforming device 25 to the housing 6 of the system. Under action of the deforming force impulses the walls of the cylinders which must be enough stout are strained periodically in accordance with the rotating speed of the working body 1 and the deforming force impulses. As a certain time for the field wave passing through the cylinders walls is necessary, then the secondary reaction forces at bearing 22. 23 will not be collinear to the primary reaction force. Therefore a resultant propulsion force different of zero is generated. By changing the deforming device 25 position can be changed the direction and the dimension of the generated force.

A variant of the system includes a cylindrical elastic or solid body 1 which medial units are made from more than one joint cylinders put in each other thus elongating the path of the wave and phase difference.

**Claims**

1.  A method for generating a linear force from a rotation within a system comprising a working body (1) fixed to a driving mechanism (5), where the working body (1) rotates at constant rotating speed wherein to at least at one point of the working body periphery is applied a force impulse deforming elastically the working body (1) and directed radially, **characterized in that** an energy power field having wave length $L_E$ and speed $V_E$ is generated which passes through the working body (1) so that at a point opposite to the point of the impulse application the working body (1) transmits to the system a secondary impulse with a vector turned towards the reaction of the applied impulse vector to an angle different of 180° therefore the resultant force from the two impulses is the linear force.

2.  A method in accordance with claim 1, **characterized in that** the energy power field passes through the working body (1) for a fixed time $T_K=\sqrt{2m/C}$, where m is the mass of the working body (1), C is the elastic index of the working body (1) to which time corresponds a determined speed of rotation $N_K$, whereas the reaction forces become unidirectional.

3.  A method in accordance with claim 1 **characterized, in that** the energy power field passes through the working body (1) for a fixed time $T_K=\sqrt{2m/C}$, where m is the mass of the working body (1), C is the elastic index of the working body (1) whereas the rotating speed N of the working body (1) is less than the rotating speed $N_K$ corresponding to $T_K$ therefore the vector of the secondary impulse is rotated to an angle $\Theta=\pi N/N_K$, and the dimension of the linear force is corrected by a coefficient $K_2=2\sin(N.\pi/N_K.2)$.

4.  A method in accordance with claims 1, 2 and 3, **characterized in that** at a point of the working body periphery during each revolution at a predetermined zone in a fixed period of time $T_i$ several consequent force impulses are applied, where $T_i<T_K/2$, and $T_i=\sum t_i$ where $t_i$ is the time for action of each separate impulse.

5.  A method in accordance with one of the claims 1 to 4, **characterized in that** on each working body revolution deforming force impulses are applied consequently at points of the working body periphery passing consequently through a predetermined zone.

6.  A method in accordance with one of the claims 1 to 5, **characterized in that** on each revolution deforming force impulses are applied at predetermined periphery points of two or more working bodies (1), (1a).

7. A method in accordance with one of the claims 1 to 5, **characterized in that** the deforming forces are applied continuously at the periphery of the working body (1).

8. A method in accordance with one of the claims 1 to 6, **characterized in that** the deforming forces are applied at stress direction of the working body (1).

9. A method in accordance with one of the claims 1 to 6, **characterized in that** the deforming forces are applied at strain direction of the working body (1).

10. A system for generating a linear force from rotation including a working body (1) fixed to a driving mechanism (5) so that the working body (1) rotates wherein the working body (1) is elastic or solid and at a zone of the trajectory of the working body periphery at least one point passes over at least one deforming surface (7) as a result a force impulse is generated deforming the working body (1) and directed radially, **characterized in that** an energy power field having wave length $L_E$ and speed $V_E$ is generated which passes through the working body (1) so that at a point opposite to the point of the impulse application the working body (1) transmits to the system a secondary impulse with a vector turned towards the reaction of the applied impulse vector to an angle different of 180° therefore the resultant force from the two impulses is the linear force.

11. A system in accordance with claim 10, **characterized in that** the ends of the working body (1) freely slide in the caps (2) whereas the working body (1) together with the caps (2) are placed in the cylindrical body (3) so that the caps (2) freely slide in the cylindrical body (3) which is coupled with the rotor (10) of the driving mechanism (5) at that on the outer surface of the caps (2) are mounted the rollers (4) which roll over the inner surface of the cylindrical housing (6) and at least one deforming surface (7) is mounted to the housing (6) at a predetermined zone of the rollers (4) path.

12. A system in accordance with claim 10, **characterized in that** the working body (1) is coupled with the rotor (10) of the driving mechanism (5) and at the ends of the working body (1) are mounted rollers (4) whereas the working body (1) is placed beside the cylindrical housing (6) so that the rollers (4) roll over the outer surface of the housing (6) to wich a deforming surface (7) is formed at an predetermined zone.

13. A system in accordance with claim 10, **characterized in that** the working body (1) is placed in a cylindrical body (3) coupled with the outlet shaft (11) of the cone gear (12), (13) the inlet shaft of which is the shaft of the driving mechanism (5) and at the ends of the working body (1) are mounted the rollers (4) so that they roll over the inner surface of the cylindrical housing (6) in which is placed the working body (1) whereas the deforming surface (7) is mounted to the housing (6).

14. A system in accordance with claim 10, **characterized in that** the working body (1) is placed in a cylindrical opening formed in a flywheel (14) which is coupled with the rotor (10) of the driving mechanism (5) whereas at the ends of the working body (1) are mounted the rollers (4) so they roll over the inner surface of the cylindrical housing (6) in which are placed the flywheel (14) and the working body and the deforming surface (7) is mounted to the cylindrical housing (6).

15. A system in accordance with claim 10, **characterized in that** the system includes two identical working bodies (1), (1a), coupled with the shafts (11), (11a) of the gear (12), (13) so they rotate to different directions, at that one shaft (11a) is an outlet shaft of the driving mechanism (5), and at the ends of each working body (1), (1a) the rollers (4), (4a) are mounted respectively so they roll over the cylindrical surfaces of the housing (6) which forms two cylindrical chambers in one of which the working body (1) together with the gear (12), (13) is placed and in the other the second working body (1 a) is placed whereas the shaft (11) lay on the longitudinal axes of the first cylindrical chamber, and the shaft (11 a) lay on the longitudinal axes of the second cylindrical chamber of the housing (6) besides two deforming surfaces (7), (7a) mounted to the respective cylindrical surfaces of both chambers of the housing (6) are provided.

16. A system in accordance with one of claims 10 to 15, **characterized in that** the deforming surface (7) is mounted to the housing (6) with possibilities for radial moving and motion along the circle of the cylindrical housing (6) and fixing at a determined position and is equipped with a regulating device (8).

**17.** A system in accordance with one of claims 10 to 16, **characterized in that** the working body (1) is solid.

**18.** A system in accordance with one of claims 10 to 16, **characterized in that** the working body (1) is a cylindrical spring.

**19.** A system in accordance with one of claims 10 to 18, **characterized in that** the working body (1) has a variable cross-section that increases from the ends of the working body (1) towards the center of its rotation.

**20.** A system in accordance with claim 10, **characterized in that** the working body (1) is disc shaped and the deforming surface (7) is mounted to the housing (6) whereas the rotor (10) of the driving mechanism (5) is coupled with the working body (1) and the stator of the driving mechanism (5) is fixed to the axes (15) which forms part of the housing (6).

**21.** A system in accordance with claim 10, **characterized in that** the working body (1) is a metal disc fixed symmetrically with a gap to the shaft (11) which is coupled with the rotor (10) of the drive mechanism (5), whereas the disc (1) is fixed to the shaft (11) by rubber washers (16), (17) and fastening nuts (18), (19), so that the outer peripheral surface of the disc slides over the inner cylindrical surface of the housing (6) to which the deforming surface (7) is mounted.

**22.** A system in accordance with claim 21, **characterized in that** the shaft (11) is an inlet shaft of the gear (12), (13) to which outlet shaft (11 a) is mounted a second metal disc by the rubber washers (16a), (17a) and fastening nuts (18a), (19a) whereas the second disc is placed in the cylindrical housing (6a) to which inner cylindrical surface the second deforming surface (7a) is mounted.

**23.** A system in accordance with claim 10, **characterized in that** the system includes at least two disc shaped working bodies (1), (1a) where the working body (1) is coupled with the shaft (11) which is mounted so that its axes can move in a grove (20) formed in the housing (6) and the other working body (1a) is mounted in the housing (6) and is coupled with the rotor (10) of the driving mechanism (5) whereas the first working body (1) is fixed at a special position towards the second working body (1a) so that at the contact zone of the two working bodies (1), (1a) a deforming surface (7) (7a) is formed.

**24.** A system in accordance with claims 10, 11, 12, 13, 14 or 15, **characterized in that** the working body (1) is a hollow cylinder (3) filled inside with a fluid.

**25.** A system in accordance with one of claims 10 to 24, **characterized in that** the system includes two or more deforming surfaces (7), (7a).

**26.** A system in accordance with claims 20 or 23, **characterized in that** the working body (1) is a gas filled disc made from elastic material.

**27.** A system in accordance with one of claims 10 to 26, **characterized in that** the working body (1) is composite made from two or more solid materials.

**28.** A system in accordance with claim 10, **characterized in that** the solid or elastic working body (1) coupled with the driving mechanism (5) is formed of at least two hollow discs joint to each other by a medial zone and placed crosswise towards the rotating axes where the working body (1) is placed in the housing (6) and rotates towards the housing (6) by means of bearings (22) and to the inner side of the housing (6) at least one deforming device (25) is mounted so that it presses or strains the zone in the middle of the two discs of the working body (1).

**29.** A system in accordance with claim 28, **characterized in that** the working body (1) is formed of more than two hollow discs.

**30.** A system in accordance with claim 10, **characterized in that** the solid or elastic working body (1) coupled with the driving mechanism (5) is made of at least two hollow joint cylinders (3) put in each other and laying along the axes of rotation so they form central medial and outer units (26), (27), (28), (29), (30) whereas one central unit (26) is fixed to a bearing and another to the driving mechanism (5) and the middle zone of the outer unit (30) contracts at least one deforming device (25) which is mounted freely to the housing (6).

**31.** A system in accordance with claim 30, **characterized in that** the system includes at least two working bodies (1) joint by a medial zone which contacts the deforming device (25) whereas the outer end of one of the bodies is fixed to a bearing (22) and the outer end of the other body is coupled with the driving mechanism (5).

**Patentansprüche**

**1.** Verfahren zur Erzeugung einer linearen Kraft aus einer Umdrehung in einem System, das einen an einem Antriebsmechanismus (5) fixierten Arbeitskörper (1) aufweist, wobei der Arbeitskörper (1) sich mit einer konstanten Rotationsgeschwindigkeit dreht, wobei auf wenigstens einen Punkt des Randes des Arbeitskörpers eine Impulskraft ausgeübt wird, die den Arbeitskörper (1) elastisch verformt und die in radialer Richtung gerichtet ist, **dadurch gekennzeichnet, dass** ein Energiefeld mit einer Wellenlänge $L_E$ und einer Geschwindigkeit $V_E$ erzeugt wird, das durch den Arbeitskörper (1) geht, so dass der Arbeitskörper (1) an einem Punkt, der dem Punkt des Impulsangriffs gegenüberliegt, an das System einen zweiten Impuls mit einem Vektor überträgt, der in Richtung der Reaktion des ausgeübten Impulses in einem Winkel gerichtet ist, der sich von 180° unterscheidet, wodurch die resultierende Kraft aus den zwei Impulsen die lineare Kraft ist.

**2.** Verfahren nach Anspruch 1, **dadurch gekennzeichnet, dass** das Energiefeld den Arbeitskörper (1) während einer festen Zeit $T_K=\sqrt{2m/C}$ durchdringt, wobei m die Masse des Arbeitskörpers (1), C der Elastizitätsmodul des Arbeitskörpers (1) ist, wobei der Zeit eine vorgegebene Drehgeschwindigkeit $N_K$ entspricht, während die Reaktionskräfte in eine Richtung gerichtet werden.

**3.** Verfahren nach Anspruch 1, **dadurch gekennzeichnet, dass** das Energiefeld den Arbeitskörper (1) während einer festen Zeit $T_K=\sqrt{2m/C}$ durchdringt, wobei m die Masse des Arbeitskörpers (1), C der Elastizitätsmodul des Arbeitskörpers (1) ist, wobei die Drehgeschwindigkeit N des Arbeitskörpers (1) kleiner als die Drehgeschwindigkeit $N_K$ ist, die der Zeit $T_K$ entspricht, weshalb der Vektor des zweiten Impulses um einen Winkel $\ominus=\pi N/N_K$ gedreht ist und die Größe der linearen Kraft durch einen Koeffizienten $K_2=2\sin(N.\pi/N_K.2)$ korrigiert ist.

**4.** Verfahren nach einem der Ansprüche 1, 2 oder 3, **dadurch gekennzeichnet, dass** an einem Punkt des Randes des Arbeitskörpers während jeder Umdrehung in einer vorgegebenen Zone in einer festen Zeitdauer der Zeit $T_i$ mehrere aufeinanderfolgende Kraftimpulse auferlegt werden, wobei $T_i<T_K/2$ und $T_i=\sum t_i$, wobei $t_i$ die Zeit zur Durchführung jedes einzelnen Impulses ist.

**5.** Verfahren nach einem der Ansprüche 1 bis 4, **dadurch gekennzeichnet, dass** bei jeder Umdrehung des Arbeitskörpers verformende Impulskräfte aufeinanderfolgend auf Punkten des Randes des Arbeitskörpers ausgeübt werden, die aufeinanderfolgend eine vorgegebene Zone passieren.

**6.** Verfahren nach einem der Ansprüche 1 bis 5, **dadurch gekennzeichnet, dass** bei jeder Umdrehung Impulskräfte auf vorgegebene Randpunkte von zwei oder mehr Arbeitskörpern (1), (1a) ausgeübt werden.

**7.** Verfahren nach einem der Ansprüche 1 bis 5, **dadurch gekennzeichnet, dass** die verformenden Kräfte kontinuierlich auf den Rand des Arbeitskörpers (1) ausgeübt werden.

**8.** Verfahren nach einem der Ansprüche 1 bis 6, **dadurch gekennzeichnet, dass** die verformenden Kräfte in der Spannungsrichtung des Arbeitskörpers (1) ausgeübt werden.

**9.** Verfahren nach einem der Ansprüche 1 bis 6, **dadurch gekennzeichnet, dass** die verformenden Kräfte in der Dehnungsrichtung des Arbeitskörpers (1) ausgeübt werden.

**10.** System zur Erzeugung einer linearen Kraft aus einer Umdrehung, das einen Arbeitskörper (1) aufweist, der an einem Antriebsmechanismus (5) fixiert ist, so dass der Arbeitskörper (1) sich dreht, wobei der Arbeitskörper (1) elastisch oder fest ist, und an einer Zone der Bahn des Bereichs des Randes des Arbeitskörpers wenigstens ein Punkt wenigstens eine Verformungsfläche (7) passiert, wobei als Ergebnis eine Impulskraft erzeugt wird, die den Arbeitskörper (1) verformt und in radialer Richtung gerichtet ist, **dadurch gekennzeichnet, dass** ein Energiefeld mit einer Wellenlänge $L_E$ und einer Geschwindigkeit $V_E$ erzeugt wird, das durch den Arbeitskörper (1) geht, so dass der Arbeitskörper (1) an einem Punkt, der dem Punkt des Impulsangriffs gegenüberliegt, an das System einen zweiten Impuls mit einem Vektor überträgt, der in Richtung der Reaktion des ausgeübten Impulses in einem Winkel, der sich von 180° unterscheidet, gerichtet ist, wodurch die resultierende Kraft aus den zwei Impulsen die lineare Kraft ist.

**11.** System nach Anspruch 10, **dadurch gekennzeichnet, dass** die Enden des Arbeitskörpers (1) frei in den Kappen (2) gleiten, während der Arbeitskörper (1) gemeinsam mit den Kappen (2) in dem zylindrischen Körper (3) angeordnet sind, so dass die Kappen (2) frei im zylindrischen Körper (3) gleiten, welcher mit dem Rotor (10) des Antriebsmechanismuses (5) gekoppelt ist, und dass an der Außenfläche der Kappen (2) Rollen (4) angebracht sind, die über die Innenfläche des zylindrischen Gehäuses (6) rollen, und dass wenigstens eine Verformungsfläche (7) am Gehäuse (6) an einer vorgegebenen Zone des Wegs der Rollen (4) angebracht ist.

**12.** System nach Anspruch 10, **dadurch gekennzeichnet, dass** der Arbeitskörper (1) mit dem Rotor (10) des Antriebsmechanismuses (5) gekoppelt ist, und dass an den Enden des Arbeitskörpers (1) Rollen (4) angebracht sind, während der Arbeitskörper (1) neben dem zylindrischen Gehäuse (6) angeordnet ist, so dass die Rollen (4) über die Außenfläche des Gehäuses (6) rollen, an dem eine Verformungsfläche (7) an einer vorgegebenen Zone ausgebildet ist.

**13.** System nach Anspruch 10, **dadurch gekennzeichnet, dass** der Arbeitskörper (1) in einem zylindrischen Körper (3) angeordnet ist, gekoppelt mit der Abtriebswelle (11) des Kegelscheibenantriebs (12), (13), dessen Antriebswelle die Welle des Antriebsmechanismuses (5) ist, und dass an den Enden des Arbeitskörpers (1) Rollen (4) angebracht sind, so dass diese über die Innenfläche des zylindrischen Gehäuses (6) rollen, in dem der Arbeitskörper (1) angeordnet ist, während die Verformungsfläche (7) am Gehäuse (6) angebracht ist.

**14.** System nach Anspruch 10, **dadurch gekennzeichnet, dass** der Arbeitskörper (1) in einer zylindrischen Öffnung eines Schwungrades (14) angeordnet ist, das mit dem Rotor (10) des Antriebsmechanismuses (5) gekoppelt ist, während an den Enden des Arbeitskörpers (1) die Rollen (4) angebracht sind, so dass diese über die Innenfläche des zylindrischen Gehäuses (6) rollen, in dem das Schwungrad (14) und der Arbeitskörper angeordnet sind, und dass die Verformungsfläche (7) an dem zylindrischen Gehäuse (6) angebracht ist.

**15.** System nach Anspruch 10, **dadurch gekennzeichnet, dass** das System zwei identische Arbeitskörper (1), (1a) umfasst, die mit den Wellen (11), (11a) des Getriebes (12), (13) gekoppelt sind, so dass sie sich in unterschiedlichen Richtungen drehen, wobei an einer Welle (11a) eine Abtriebswelle des Antriebsmechanismuses (5) und an den Enden jedes Arbeitskörpers (1), (1a) die Rollen (4), (4a) jeweils angebracht sind, so dass sie über die zylindrischen Flächen des Gehäuses (6) rollen, welche zwei zylindrische Kammern bilden, in einer von denen der Arbeitskörper (1) zusammen mit dem Getriebe (12), (13) angeordnet ist, und in der anderen der zweite Arbeitskörper (1a) angeordnet ist, wobei die Welle (11) in Längsrichtung der ersten zylindrischen Kammer liegt, und die Welle (11a) in der Längsrichtung der zweiten zylindrischen Kammer des Gehäuses (6) liegt, wobei zwei an den jeweiligen zylindrischen Flächen der beiden Kammern des Gehäuses (6) angebrachte Verformungsflächen (7), (7a) vorgesehen sind.

**16.** System nach einem der Ansprüche 10 bis 15, **dadurch gekennzeichnet, dass** die Verformungsfläche (7) an dem Gehäuse (6) mit Möglichkeiten einer radialen Bewegung und einer Bewegung entlang dem Kreis des zylindrischen Gehäuses (6) und der Fixierung in einer vorgegebenen Position angebracht ist, und mit einer Regelvorrichtung (8) ausgestattet ist.

**17.** System nach einem der Ansprüche 10 bis 16, **dadurch gekennzeichnet, dass** der Arbeitskörper (1) fest ist.

**18.** System nach einem der Ansprüche 10 bis 16, **dadurch gekennzeichnet, dass** der Arbeitskörper (1) eine Zylinderfeder ist.

**19.** System nach einem der Ansprüche 10 bis 18, **dadurch gekennzeichnet, dass** der Arbeitskörper (1) einen variablen Querschnitt aufweist, der sich von den Enden des Arbeitskörpers (1) zur Mitte seiner Umdrehung vergrößert.

**20.** System nach Anspruch 10, **dadurch gekennzeichnet, dass** der Arbeitskörper (1) scheibenförmig ausgebildet ist und die Verformungsfläche (7) am Gehäuse (2) angebracht ist, während der Rotor (10) des Antriebsmechanismuses (5) mit dem Arbeitskörper (1) gekoppelt ist und der Stator des Antriebsmechanismuses (5) an der Achse (15) fixiert ist, welche einen Teil des Gehäuses (6) bildet.

**21.** System nach Anspruch 10, **dadurch gekennzeichnet, dass** der Arbeitskörper (1) eine Metallscheibe ist, die symmetrisch mit einem Spalt an der Welle (11) fixiert ist, welche mit dem Rotor (10) des Antriebsmechanismuses (10) gekoppelt ist, während die Scheibe (1) an der Welle (11) durch Gummischeiben (16), (17) und Befestigungsmuttern (18), (19) fixiert ist, so dass die äußere Umfangsfläche der Scheibe über die Innenzylinderfläche des Gehäuses (6) gleitet, an der die Verformungsfläche (7) angebracht ist.

**22.** System nach Anspruch 21, **dadurch gekennzeichnet, dass** die Welle (11) eine Eingangswelle des Getriebes (12), (13) ist, an dessen Ausgangswelle (11a) eine zweite Metallscheibe mittels der Gummischeiben (16a), (17a) und Befestigungsmuttern (18a), (19a) angebracht ist, während die zweite Scheibe in dem zylindrischen Gehäuse (6a) angeordnet ist, an dessen Innenzylinderfläche die zweite Verformungsfläche (7a) angebracht ist.

**23.** System nach Anspruch 10, **dadurch gekennzeichnet, dass** das System wenigstens zwei scheibenförmige Arbeitskörper (2), (1a) aufweist, wobei der Arbeitskörper (1) mit der Welle (11) gekoppelt ist, die angebracht ist, so dass ihre Achse in einer Nut (20), die im Gehäuse (6) ausgebildet ist, sich bewegen kann, und der andere Arbeitskörper (1a) im Gehäuse (6) angebracht ist und mit dem Rotor (10) des Antriebsmechanismuses (5) gekoppelt ist, während der erste Arbeitskörper (1) an einer speziellen Stelle in Richtung des zweiten Arbeitskörpers (1a) fixiert ist, so dass an einer Kontaktzone der beiden Arbeitskörper (1), (1 a) eine Verformungsfläche (7) (7a) ausgebildet ist.

**24.** System nach den Ansprüchen 10, 11, 12, 13, 14 oder 15, **dadurch gekennzeichnet, dass** der Arbeitskörper (1) ein Hohlzylinder (3) ist, der innen mit einem Fluid gefüllt ist.

**25.** System nach einem der Ansprüche 10 bis 24, **dadurch gekennzeichnet, dass** das System zwei oder mehr Verformungsflächen (7), (7a) umfasst.

**26.** System nach den Ansprüchen 20 oder 23, **dadurch gekennzeichnet, dass** der Arbeitskörper (1) eine gasgefüllte Scheibe aus einem elastischen Material ist.

**27.** System nach einem der Ansprüche 10 bis 26, **dadurch gekennzeichnet, dass** der Arbeitskörper (1) ein Composite aus zwei oder mehr festen Materialien ist.

**28.** System nach Anspruch 10, **dadurch gekennzeichnet, dass** der feste oder elastische mit dem Antriebsmechanismus (5) gekoppelte Arbeitskörper (1) aus wenigstens zwei hohlen Scheiben gebildet ist, die miteinander durch eine mittlere Zone verbunden sind und über Kreuz in Richtung der Rotationsachse angeordnet sind, wobei der Arbeitskörper (1) im Gehäuse (6) angeordnet ist und sich mittels Lager (22) zum Gehäuse (6) hin dreht, und an der Innenseite des Gehäuses (6) wenigstens eine Verformungsvorrichtüng (25) angebracht ist, so dass sie die Zone in der Mitte der zwei Scheiben des Arbeitskörpers (1) zusammenpresst oder dehnt.

**29.** System nach Anspruch 28, **dadurch gekennzeichnet, dass** der Arbeitskörper (1) aus mehr als zwei hohlen Scheiben gebildet ist.

**30.** System nach Anspruch 10, **dadurch gekennzeichnet, dass** der feste oder elastische mit dem Antriebsmechanismus (5) gekoppelte Arbeitskörper (1) aus wenigstens zwei hohlen, verbundenen Zylindern (3) gefertigt ist, die ineinandergesetzt sind und in der Rotationsachse liegen, so dass sie zentrale, mittlere und äußere Einheiten (26), (27), (28), (29), (30) bilden, während eine zentrale Einheit (26) an einem Lager fixiert und eine andere an dem Antriebsmechanismus (5) fixiert und die mittlere Zone der äußeren Einheit (30) wenigstens eine Verformungsvorrichtung (25) kontaktiert, die frei am Gehäuse (6) angebracht ist.

**31.** System nach Anspruch 30, **dadurch gekennzeichnet, dass** das System wenigstens zwei Arbeitskörper (1) umfasst, welche durch eine mittlere Zone verbunden sind, die die Verformungsvorrichtung (25) kontaktiert, während das äußere Ende eines der Körper an einem Lager (22) fixiert und das andere äußere Ende des anderen Körpers mit dem Antriebsmechanismus (5) gekoppelt ist.

## Revendications

**1.** Procédé permettant de produire une force linéaire à partir d'une rotation dans un système comprenant : un corps de travail (1) fixé à un mécanisme d'entraînement (5), où le corps de travail (1) tourne à une vitesse de rotation constante à laquelle est appliquée, en au moins un point de la périphérie du corps de travail, une impulsion de force, dirigée dans le sens radial qui provoque la déformation élastique du corps de travail (1), **caractérisé en ce qu'**un champ d'énergie ayant une longueur d'onde $L_E$ et une vitesse $V_E$ est généré, lequel traverse le corps de travail (1) de sorte qu'en un point opposé au point d'application de l'impulsion, le corps de travail (1) transmet au système une impulsion secondaire avec un vecteur tourné vers la réaction du vecteur de l'impulsion appliquée avec un angle différent de 180°, la force résultante des deux impulsion étant par conséquent la force linéaire.

2. Procédé selon la revendication 1, **caractérisé en ce que** le champ d'énergie traverse le corps de travail (1) pendant une durée fixe $T_K=\sqrt{2m/C}$, où m est la masse du corps de travail (1), C est l'indice élastique du corps de travail (1) au moment auquel correspond une vitesse de rotation déterminée $N_K$, tandis que les forces de réaction deviennent unidirectionnelles.

3. Procédé selon la revendication 1, **caractérisé en ce que** le champ d'énergie traverse le corps de travail (1) pendant une durée fixe $T_K=\sqrt{2m/C}$, où m est la masse du corps de travail (1), C est l'indice élastique du corps de travail (1), alors que la vitesse de rotation N du corps de travail (1) est inférieure à la vitesse de rotation $N_K$ correspondant à $T_K$, le vecteur de l'impulsion secondaire est par conséquent incliné à un angle $\ominus = \pi N/N_K$, et la l'amplitude de la force linéaire est corrigée au moyen d'un coefficient $K_2 = 2sin(N.\pi/N_K.2)$.

4. Procédé selon les revendications 1, 2 et 3, **caractérisé en ce que**, en un point de la périphérie du corps de travail, au cours de chaque révolution, dans une zone préétablie, pendant une durée fixe $T_i$, plusieurs impulsions de force consécutives sont appliquées, où $T_i < T_K/2$, et $T_i = \sum t_i$ où $t_i$ est le temps nécessaire à l'action de chaque impulsion séparée.

5. Procédé selon l'une quelconque des revendications 1 à 4, **caractérisé en ce que**, à chaque révolution du corps de travail, des forces de déformation sont appliquées consécutivement sur des points de la périphérie du corps de travail passant consécutivement dans une zone préétablie.

6. Procédé selon l'une quelconque des revendications 1 à 5, **caractérisé en ce que**, à chaque révolution, des forces de déformation sont appliquées en des points prédéterminés de la périphérie de deux ou plus corps de travail (1), (1a).

7. Procédé selon l'une quelconque des revendications 1 à 5, **caractérisé en ce que** les forces de déformation sont appliquées continuellement à la périphérie du corps de travail (1).

8. Procédé selon l'une quelconque des revendications 1 à 6, **caractérisé en ce que** les forces de déformation sont appliquées dans le sens de la compression du corps de travail (1).

9. Procédé selon l'une quelconque des revendications 1 à 6, **caractérisé en ce que** les forces de déformation sont appliquées dans le sens de l'étirement du corps de travail (1).

10. Système permettant de produire une force linéaire à partir d'une rotation, comprenant un corps de travail (1) fixé à un mécanisme d'entraînement (5) servant à entraîner en rotation le corps de travail (1), où le corps de travail (1) est élastique ou rigide et, dans une zone de la trajectoire de la périphérie du corps de travail, au moins un point passe sur au moins une surface déformante (7) résultant en la création d'une impulsion de force qui déforme le corps de travail (1) et est dirigée dans le sens radial, **caractérisé par** la création d'un champ d'énergie ayant la longueur d'onde $L_E$ et la vitesse $V_E$ qui traverse le corps de travail (1), si bien qu'en un point situé à l'opposé du point d'application de l'impulsion, le corps de travail (1) transmet au système une impulsion secondaire ayant un vecteur tourné vers la réaction du vecteur de l'impulsion appliquée à un angle différent de 180°, par conséquent la force résultante des deux impulsions est la force linéaire.

11. Système selon la revendication 10, **caractérisé en ce que** les extrémités du corps de travail (1) coulissent librement dans les bouchons femelles (2), tandis que le corps de travail (1) et les bouchons femelles (2) sont tous placés dans le corps cylindrique (3) de telle sorte que les bouchons femelles (2) coulissent librement dans le corps cylindrique (3) qui est relié au rotor (10) du mécanisme d'entraînement (5) et, que des galets (4) sont montés sur la face extérieure des bouchons femelles (2), lesquels galets (4) roulent sur la face interne du boîtier cylindrique (6) et qu'au moins une surface de déformation (7) est montée sur le boîtier (6) dans une zone prédéterminée du trajet des galets (4).

12. Système selon la revendication 10, **caractérisé en ce que** le corps de travail (1) est relié au rotor (10) du mécanisme d'entraînement (5) et des galets (4) sont montés aux extrémités du corps de travail (1), tandis que le corps de travail (1) est placé à l'intérieur du boîtier cylindrique (6), de sorte que les galets (4) roulent sur la face extérieure du boîtier (6) qui comporte une surface de déformation (7) dans une zone prédéterminée.

13. Système selon la revendication 10, **caractérisé en ce que** le corps de travail (1) est placé dans un corps cylindrique (3) relié à l'arbre de sortie (11) de l'engrenage conique (12, 13) dont l'arbre d'entrée est l'arbre du mécanisme d'entraînement (5) et, aux extrémités du corps de travail (1) sont montés les galets (4) de sorte qu'ils roulent sur la surface interne du boîtier cylindrique (6) dans lequel est placé le corps de travail (1) alors que la surface de déformation est montée sur le boîtier (6).

14. Système selon la revendication 10, **caractérisé en ce que** le corps de travail (1) est placé dans une ouverture cylindrique pratiquée dans une roue volante (14) qui est reliée au rotor (10) du mécanisme d'entraînement (5), alors que les galets (4) sont montés sur les extrémités du corps de travail (1) de telle sorte qu'ils roulent sur la face interne du boîtier cylindrique (6) dans lequel sont placés la roue volante (14) et le corps de travail (1) et, la surface de déformation est montée sur le boîtier cylindrique (6).

15. Système selon la revendication 10 **caractérisé en ce que** le système inclut deux corps de travail identiques (1), (1a), reliés aux arbres (11), (11a) de l'engrenage (12), (13) de manière à tourner dans des sens différents, **en ce qu'**un arbre (11a) est un arbre de sortie du mécanisme d'entraînement (5), et aux extrémités de chaque corps de travail (1), (1a) sont respectivement montés les galets (4), (4a) de telle sorte qu'ils roulent sur les surfaces cylindriques du boîtier (6) qui forme deux chambres cylindriques à l'intérieur de l'une desquelles sont placés ensemble le corps de travail (1) et l'engrenage (12), (13), et dans l'autre est placé le second corps de travail (1a), tandis que l'arbre (11) repose sur les axes longitudinaux de la première chambre cylindrique et l'arbre (11a) repose sur les axes longitudinaux de la seconde chambre cylindrique du boîtier (6), en outre, deux surfaces déformantes (7), (7a) sont montées sur les faces cylindriques respectives des deux chambres.

16. Système selon l'une quelconque des revendications 10 à 15, **caractérisé en ce que** la surface déformante (7) est montée dans le boîtier (6) avec des possibilités de déplacement et de mouvement radial sur le cercle du boîtier cylindrique (6) et de fixation à un emplacement déterminé et, est munie d'un dispositif de régulation (8).

17. Système selon l'une quelconque des revendications 10 à 16, **caractérisé en ce que** le corps de travail (1) est rigide.

18. Système selon l'une quelconque des revendications 10 à 16, **caractérisé en ce que** le corps de travail (1) est un ressort cylindrique.

19. Système selon l'une quelconque des revendications 10 à 18, **caractérisé en ce que** le corps de travail (1) a une section en coupe variable qui augmente des extrémités du corps de travail (1) vers son centre de rotation.

20. Système selon la revendication 10, **caractérisé en ce que** le corps de travail a la forme d'un disque et la surface déformante (7) est montée sur le boîtier (6), tandis que le rotor (10) du mécanisme d'entraînement (5) est relié au corps de travail (1) et le stator du mécanisme d'entraînement (5) est fixé sur les axes (15) qui font partie intégrante du boîtier (6).

21. Système selon la revendication 10, **caractérisé en ce que** le corps de travail (1) est un disque de métal fixé symétriquement, avec un espace, sur l'arbre (11) qui est relié au rotor (10) du mécanisme d'entraînement (5), tandis que le disque (1) est fixé à l'arbre (11) par des rondelles de caoutchouc (16), (17) et des écrous de fixation (18), (19), si bien que la face périphérique externe du disque coulisse sur la face cylindrique interne du boîtier (6) sur lequel est montée la surface de déformation (7).

22. Système selon la revendication 21, **caractérisé en ce que** l'arbre (11) est un arbre d'entrée de l'engrenage (12), (13) sur l'arbre de sortie (11a) duquel est monté un second disque métallique au moyen de rondelles caoutchouc (16a), (17a) et d'écrous de fixation (18a), (19a), tandis que le second disque est placé dans le boîtier cylindrique (6a) sur la face cylindrique interne duquel est montée la deuxième surface déformante (7a).

23. Système selon la revendication 10, **caractérisé en ce que** le système comprend au moins deux corps de travail en forme de disque (1), (1a), où le corps de travail (1) est couplé à l'arbre (11) qui est monté de manière à ce que ses axes puissent bouger dans une rainure (20) pratiquée dans le boîtier (6) et, l'autre corps de travail (1a) est monté dans le boîtier (6) et est relié au rotor (10) du mécanisme d'entraînement (5), tandis que le premier corps de travail (1) est fixé dans une position spéciale par rapport au second corps de travail (1a) pour qu'une surface de déformation (7) (7a) soit formée à la zone de contact entre les deux corps de travail (1), (1a).

**24.** Système selon les revendications 10, 11, 12, 13, 14 ou 15, **caractérisé en ce que** le corps de travail (1) est un cylindre creux (3) rempli d'un fluide.

**25.** Système selon l'une quelconque des revendications 10 à 24, **caractérisé en ce que** le système comprend deux surfaces déformantes ou plus (7), (7a).

**26.** Système selon les revendications 20 ou 23, **caractérisé en ce que** le corps de travail (1) est un disque rempli de gaz fait dans un matériau élastique.

**27.** Système selon l'une quelconque des revendications 10 à 26, **caractérisé en ce que** le corps de travail (1) est un composite fait de deux matériaux rigides ou plus.

**28.** Système selon la revendication 10, **caractérisé en ce que** le corps de travail (1) élastique ou rigide, relié au mécanisme d'entraînement (5), est formé d'au moins deux couronnes circulaires, reliées l'une à l'autre par une zone intermédiaire et traversées transversalement par les axes de rotation, où le corps de travail (1) est placé dans le boîtier (6) et tourne par rapport au boîtier (6) grâce à des supports (22) et, sur la face interne du boîtier (6) est monté au moins un dispositif déformant (25) qui comprime ou étire la zone située entre les deux couronnes du corps de travail (1).

**29.** Système selon la revendication 28, **caractérisé en ce que** le corps de travail (1) est composé de plus de deux couronnes circulaires.

**30.** Système selon la revendication 10, **caractérisé en ce que** le corps de travail (1) rigide ou élastique, relié au mécanisme d'entraînement (5) est fait d'au moins deux cylindres (3) creux, joints, placés l'un dans l'autre et s'étendant le long des axes de rotation de manière à former des unités centrales, intermédiaires et externes (26), (27), (28), (29), (30), où l'une des unités centrales (26) est fixée à un support et une autre au mécanisme d'entraînement (5) et la zone médiane de l'unité externe (30) contracte au moins un dispositif déformant (25) qui est monté librement sur le boîtier (6).

**31.** Système selon la revendication 30, **caractérisé en ce que** le système comprend au moins deux corps de travail (1) reliés par une zone médiane qui est en contact avec le dispositif déformant (25), où l'extrémité extérieure de l'un des corps est fixée à un support (22) et l'extrémité extérieure de l'autre corps est reliée au mécanisme d'entraînement (5).

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16

Fig.17

Fig.18

Fig.19

Fig.20

Fig.21

29